# DEMANDE DE BREVET EUROPEEN

(11) **EP 1 355 254 A1**
(43) Date de publication de la demande: **22.10.2003**
(21) Numéro de dépôt: 03290903.8
(22) Date de dépôt: 10.04.2003
(51) Int. Cl.: G06F 17/60, G06K 9/00

(54) **Procédé d'identification permettant de conférer une traçabilité à des produits fabriqués sur une ligne de fabrication, et applications**

(30) Priorité: 18.04.2002 FR 0204871
(71) Demandeur: Gaz de France (GDF) Service National, 75017 Paris (FR)
(72) Inventeur: Gueugnaut, Dominique, 75005 Paris (FR); Darut, Alain, 78400 Chatou (FR); Dattolo, Francis, 91260 Juvisy sur Orge (FR)
(74) Mandataire: Berger, Helmut

(57) **Abrégé**

L'invention concerne notamment un procédé d'identification permettant de conférer une traçabilité à des produits (PROD) fabriqués à partir de données d'origine (C, D), initialement réunies en un point source (P_SOURCE) et comprenant un numéro d'identification de commande (C) et des données de fabrication (D) communes à ces produits (PROD).

Le procédé de l'invention prévoit la formation de deux flux d'information parallèles, (Φ₁, Φ₂) dont chacun assure une propagation des données d'origine (C, D) dans le temps et l'espace à partir du point source (P_SOURCE), et comprend trois tests (COMPAR_1, COMPAR_2, COMPAR_3) permettant de vérifier la cohérence interne et l'intégrité de ces données d'origine dans la forme sous laquelle elles sont propagées.

## Description

La présente invention concerne, de façon générale, les techniques de suivi de produits destinés à faire l'objet d'une exploitation limitée dans le temps pour des questions de garantie de fonctionnalité et/ou de sécurité, ces techniques étant conçues pour permettre notamment d'optimiser la surveillance de l'évolution de ces produits dans le temps, de corréler cette évolution aux caractéristiques de constitution ou de fabrication de ces produits, d'optimiser le remplacement de ces produits, et d'anticiper leurs défaillances avant l'apparition de défauts gênants.

Plus précisément, l'invention concerne, selon un premier de ses aspects, un procédé d'identification permettant de conférer une traçabilité à des produits fabriqués sur une ligne de fabrication, au cours d'une campagne de fabrication, et à partir de données d'origine initialement réunies en un point source et comprenant un numéro d'identification de commande et des données de fabrication communes aux produits fabriqués lors de cette campagne.

Les techniques de traçabilité sont connues et utilisées dans différents secteurs de l'industrie, et un exemple en est donné dans la demande de brevet WO9851458.

Ces techniques ont généralement en commun le fait qu'elles requièrent l'attribution correcte et indissoluble, à chaque produit à identifier, d'une information qui le concerne spécifiquement et qui, éventuellement, le décrit de façon unique.

La présente invention a précisément pour but de proposer un procédé d'identification de produits répondant à ce besoin.

A cette fin, le procédé de l'invention, par ailleurs conforme à la définition générique qu'en donne le préambule ci-dessus, est essentiellement caractérisé en ce qu'il comprend la mise en place de deux flux d'information parallèles dont chacun assure une propagation des données d'origine dans le temps et l'espace à partir du point source, un premier de ces flux se subdivisant en un flux de pilotage de fabrication, destiné à commander la fabrication des produits conformément aux données de fabrication, et en un flux de référence de fabrication, et le deuxième flux formant un flux de pilotage d'étiquetage, destiné à commander un marquage des produits fabriqués au moyen d'une apposition d'étiquettes sur ces produits, en ce que la propagation des données d'origine dans le flux de référence de fabrication est au moins assurée par l'impression d'un document d'ordre de fabrication, en ce que la propagation des données d'origine dans le flux de pilotage d'étiquetage est au moins assurée par l'impression d'un bobineau d'étiquettes et par l'impression subséquente d'un procès-verbal d'impression du bobineau, et en ce que ce procédé comprend également au moins un premier test vérifiant la cohérence entre le numéro d'identification de commande tel qu'il est imprimé sur le document d'ordre de fabrication et le numéro d'identification de commande tel qu'il est imprimé sur le procès-verbal d'impression du bobineau, un deuxième test vérifiant la cohérence entre les données de fabrication propagées par le flux de pilotage d'étiquetage, telles qu'elles sont imprimées sur le bobineau d'étiquettes et telles qu'elles sont imprimées sur le procès-verbal d'impression, et un troisième test vérifiant la cohérence entre les données de fabrication telles qu'elles sont imprimées sur le procès-verbal d'impression et telles qu'elles sont imprimées sur les étiquettes apposées sur les produits fabriqués.

De préférence, le numéro d'identification de commande est imprimé sur le procès-verbal d'impression au moins sous forme d'un code optique de numéro d'identification de commande lisible par un lecteur optique et lié au numéro d'identification de commande par une loi de codage prédéterminée.

Le premier test est typiquement mis en oeuvre en reportant dans la mémoire d'un premier ordinateur, en tant que premier élément de comparaison, le numéro d'identification de commande relevé sur le document d'ordre de fabrication, en reportant dans la mémoire de ce premier ordinateur, en tant que deuxième élément de comparaison, le numéro d'identification de commande relevé, par un premier lecteur optique relié au premier ordinateur, sous la forme du code optique de numéro d'identification de commande imprimé sur le procès-verbal d'impression, et en soumettant au premier ordinateur la tâche consistant à vérifier la correspondance entre les premier et deuxième éléments de comparaison.

Il est possible de prévoir que le numéro d'identification de commande soit relevé sur le document d'ordre de fabrication par un opérateur humain qui le lit en clair et qui le saisit plusieurs fois de suite sur un clavier connecté au premier ordinateur, et que, pour la mise en oeuvre du premier test, le premier ordinateur vérifie l'identité des numéros d'identification de commande saisis par l'opérateur et du deuxième élément de comparaison, ce deuxième élément de comparaison étant obtenu par décodage, au moyen de la loi de codage prédéterminée, du code optique de numéro d'identification de commande relevé par le premier lecteur optique.

Dans le cas où le premier test est conduit avec succès, le bobineau d'étiquettes peut être installé sur la ligne de fabrication, et une autorisation peut être donnée de procéder au deuxième test.

Les données de fabrication sont avantageusement imprimées, sur le procès-verbal d'impression et sur le bobineau d'étiquettes, au moins sous forme de codes optiques respectifs de données de fabrication lisibles par un lecteur optique et liés au numéros d'identification de commande respectifs par la loi de codage prédéterminée.

Le deuxième test peut alors être mis en oeuvre en reportant dans la mémoire d'un deuxième ordinateur, en tant que troisième élément de comparaison, les données de fabrication relevées, par un deuxième lecteur optique relié au deuxième ordinateur, sous la forme du code optique de données de fabrication imprimé sur le procès-verbal d'impression, en reportant dans la mémoire du deuxième ordinateur, en tant que quatrième élément de comparaison, les données de fabrication relevées, par le deuxième lecteur optique relié au deuxième ordinateur, sous la forme du code optique de données de fabrication imprimé sur le bobineau d'étiquettes, et en soumettant au deuxième ordinateur la tâche consistant à vérifier la correspondance entre les troisième et quatrième éléments de comparaison.

Dans le cas où le deuxième test est conduit avec succès, une autorisation peut être donnée d'étiqueter un à un les produits fabriqués, et de procéder au troisième test.

Plus précisément, une autorisation peut être donnée de fabriquer les produits, de les étiqueter un à un en sortie de la ligne de fabrication et au fur et à mesure de leur fabrication, et de procéder simultanément au troisième test.

Le procédé de l'invention comprend avantageusement une opération de vérification supplémentaire consistant, après l'impression de chaque étiquette du bobineau d'étiquettes, à relire cette étiquette de façon automatique pour vérifier au moins qu'elle a été imprimée complètement.

Chaque étiquette du bobineau peut, en plus du code optique de données de fabrication, porter un code optique lié, par la loi de codage prédéterminée, à un numéro de série spécifiquement attribué au produit destiné à recevoir cette étiquette.

Si tel est le cas, le troisième test est par exemple mis en oeuvre en reportant dans la mémoire d'un troisième ordinateur, en tant que cinquième élément de comparaison, les données de fabrication et le numéro de série relevés, par un troisième lecteur optique relié au troisième ordinateur, sous la forme des codes optiques de données de fabrication et de numéro de série imprimés sur chaque étiquette, en reportant dans la mémoire du troisième ordinateur, en tant que sixième élément de comparaison, les données de fabrication relevées sous la forme du code optique de données de fabrication imprimé sur le procès-verbal d'impression, et en soumettant au troisième ordinateur la tâche consistant à vérifier que le sixième élément de comparaison est contenu dans le cinquième élément de comparaison.

En fait, les deuxième et troisième ordinateurs peuvent être constitués par une même unité formant un terminal d'atelier, le sixième élément de comparaison pouvant lui-même être constitué par le troisième élément de comparaison mémorisé dans ce terminal d'atelier à l'occasion du deuxième test.

Le procédé de l'invention comprend avantageusement l'impression d'un procès-verbal final de fabrication et d'étiquetage, effectuée dans le cas où le troisième test est conduit avec succès.

Le procédé tel que défini ci-dessus est notamment applicable à la traçabilité de produits en polyéthylène, et particulièrement adapté à la traçabilité de tubes en polyéthylène équipant un réseau de distribution de gaz.

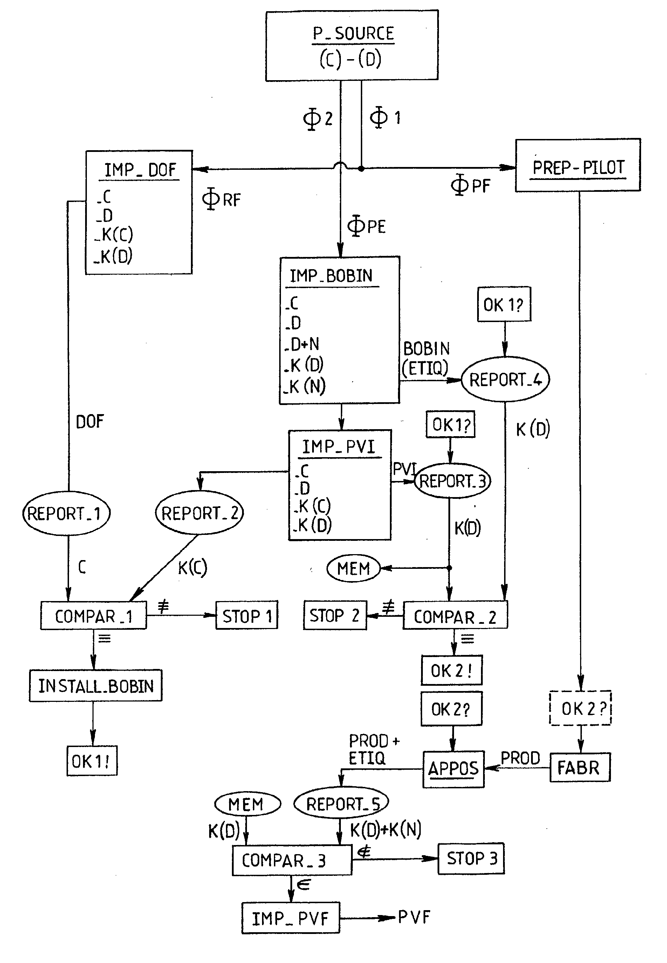

D'autres caractéristiques et avantages de l'invention ressortiront clairement de la description qui en est faite ci-après, à titre indicatif et nullement limitatif, en référence à la figure unique qui constitue un diagramme symbolique du déroulement de ce procédé.

Par souci de clarté, le procédé de l'invention sera décrit ci-après dans son application privilégiée, qui est celle de la traçabilité de produits en polyéthylène, et plus précisément encore de la traçabilité de tubes en polyéthylène équipant un réseau de distribution de gaz.

Bien que relativement récente, l'utilisation de tubes en polyéthylène dans les réseaux de distribution de gaz est très répandue.

Même si la garantie d'une bonne tenue de ces tubes au cours du temps semble a priori acquise, il est nécessaire de disposer de méthodes permettant de suivre en temps réel l'état du réseau de distribution et de contrôler son évolution dans le temps, afin d'être en mesure d'anticiper les incidents susceptibles de se produire, et de déterminer les actes d'exploitation pour y faire face.

Par ailleurs, la très grande diversité des résines polyéthylène utilisées, ainsi que l'évolution régulière de leurs performances depuis le début des années 1980, alliées à des conditions de mise en oeuvre et d'exploitation très variables, ne permettent pas de prédire une durée de vie générique sur la seule base des essais en pression hydraulique traditionnels.

Dans ces conditions, il est nécessaire de se doter d'outils et de modèles prédictifs qui tiennent compte à la fois des spécificités des différents polyéthylènes ainsi que de leurs conditions de mise en oeuvre, de pose et d'exploitation pouvant s'écarter de la normale.

La mise en oeuvre de ces outils et modèles ne pouvant garantir un piégeage à 100% des défauts, notamment en raison d'éventuelles dérives de fabrication, il est nécessaire de pouvoir retrouver dans le sol à n'importe quel moment tout tube et accessoire avéré défectueux a posteriori, sur la base d'essais de laboratoire complémentaire à long terme.

Compte tenu du grand nombre de lots de matière fabriqués en moyenne en une année pour un réseau de distribution national, il est nécessaire de disposer, sur chaque tube, d'un moyen d'identification à la fois très complet et très fiable.

L'invention, qui s'inscrit dans l'ensemble de cette problématique, s'intéresse plus spécifiquement aux conditions opératoires permettant de garantir que chaque tube reçoit le moyen d'identification qui le concerne, c'est-à-dire qui permettent d'éviter qu'un tube reçoive un moyen d'identification qui concernerait un autre tube.

Pour ce faire, le procédé de l'invention prévoit de traquer chaque tube avant même qu'il ne soit fabriqué.

De façon générale, les tubes ou produits PROD concernés sont fabriqués sur une ligne de fabrication localisée dans l'espace, au cours d'une campagne de fabrication localisée dans le temps, et à partir de données d'origine qui identifient jusque dans les détails les produits qui doivent être fabriqués, et qui sont communiquées par l'acheteur de ces produits à leur fabriquant.

Typiquement, ces données d'origine se trouvent, juste avant la campagne de fabrication, réunies chez le fabriquant, c'est-à-dire en un point source noté P_SOURCE sur les figures, et comprennent au moins un numéro d'identification de commande C, donné par l'acheteur ou par le fabriquant, et des données de fabrication D communes à l'ensemble des produits PROD qu'il est prévu de fabriquer au cours de la prochaine campagne de fabrication, le numéro d'identification de commande C et les données de fabrication D étant indissociablement affectés à cette campagne de fabrication.

Comme le montre la figure, le procédé de l'invention prévoit la formation de deux flux d'information parallèles, Φ₁ et Φ₂, dont chacun assure une propagation des données d'origine C et D dans le temps et l'espace à partir du point source P_SOURCE.

Un premier de ces deux flux, noté Φ₁, se subdivise en un flux de pilotage de fabrication noté Φ_{PF}, et en un flux de référence de fabrication noté Φ_{RF}.

Le flux de pilotage de fabrication Φ_{PF} permet de préparer le pilotage des paramètres de fabrication de la ligne de fabrication des produits PROD conformément aux données de fabrication D de ces produits, cette opération étant repérée par la référence PREP_PILOT sur la figure.

Le flux de référence de fabrication Φ_{RF} permet quant à lui d'imprimer, au cours de l'étape IMP_DOF, un document d'ordre de fabrication DOF qui est le reflet fidèle des paramètres de fabrication préparés pour la prochaine campagne, et qui contient donc au moins les données d'origine C et D.

Le second des deux flux d'information parallèles, noté Φ₂, constitue un flux de pilotage d'étiquetage Φ_{PE} et est destiné à commander un marquage des produits PROD fabriqués.

Selon un aspect de l'invention, chacun des produits PROD est marqué, au cours d'une étape notée APPOS, par apposition d'une étiquette ETIQ qui lui est spécifique.

La propagation des données d'origine C et D dans le flux de pilotage d'étiquetage Φ_{PE} est assurée, d'une part, par l'impression d'un bobineau d'étiquettes BOBIN au cours d'une étape notée IMP_BOBIN, et d'autre part par l'impression d'un procès-verbal d'impression PVI du bobineau au cours d'une étape notée IMP_PVI, l'impression du procès-verbal d'impression PVI étant conditionnée par l'impression préalable et complète du bobineau d'étiquettes BOBIN.

Pour éviter les effets négatifs d'une impression éventuellement défaillante, le procédé de l'invention peut comprendre une opération de vérification immédiate effectuée en continu pendant l'impression du bobineau d'étiquettes BOBIN et consistant, après l'impression de chaque étiquette ETIQ de ce bobineau, à relire cette étiquette de façon automatique pour vérifier au moins qu'elle a été imprimée complètement et lisiblement.

Les données d'origine C et D étant ainsi propagées dans l'espace et le temps, le procédé de l'invention comprend trois tests permettant de vérifier la cohérence interne et l'intégrité de ces données d'origine, dans la forme sous laquelle elles sont propagées.

Ainsi, le procédé de l'invention comprend tout d'abord un premier test, noté COMPAR_1, permettant de vérifier la cohérence entre le numéro d'identification de commande C tel qu'il est imprimé sur le document d'ordre de fabrication DOF et le numéro d'identification de commande C tel qu'il est imprimé sur le procès-verbal d'impression PVI du bobineau.

De préférence, le numéro d'identification de commande C est imprimé sur le procès-verbal d'impression PVI à la fois sous une forme directement lisible par un opérateur humain et qui ne justifie par d'autre notation que la référence C, et sous la forme d'un code optique K(C), par exemple d'un code barre classique, lisible par un lecteur optique à rayon laser et lié au numéro d'identification de commande C par une loi de codage prédéterminée.

Les données de fabrication D peuvent elles-mêmes être imprimées sur le procès-verbal d'impression PVI à la fois sous leur forme naturelle D, directement lisible par un opérateur humain, et sous la forme d'un code optique K(D), tel qu'un code barre, lisible par un lecteur optique automatique du même type que précédemment.

Pour mettre en oeuvre le test COMPAR_1, le procédé de l'invention comprend une opération notée REPORT_1 dans laquelle le numéro d'identification de commande C relevé sur le document d'ordre de fabrication DOF est reporté, en tant que premier élément de comparaison, dans la mémoire d'un premier ordinateur, et une opération notée REPORT_2 dans laquelle le code optique K(C) de numéro d'identification de commande imprimé sur le procès-verbal d'impression PVI et relevé par un lecteur optique relié à ce premier ordinateur est reporté dans la mémoire de cet ordinateur en tant que second élément de comparaison.

Une fois effectuées les opérations REPORT_1 et REPORT_2, le premier ordinateur vérifie la correspondance entre les éléments de comparaison qui lui ont été soumis.

Dans le cas où le processus de fabrication des produits PROD est fortement automatisé, le premier ordinateur peut être constitué par une unité centrale sur laquelle est effectuée l'opération PREP_PILOT de préparation de pilotage des paramètres de fabrication, auquel cas l'opération REPORT_1 est automatiquement effectuée par la saisie des données de fabrication sur cette unité centrale.

En revanche dans le cas où le processus de fabrication des produits PROD est faiblement automatisé, l'opération REPORT_1 peut requérir une intervention humaine.

Par exemple, le numéro d'identification de commande C peut être relevé sur le document d'ordre de fabrication DOF par un opérateur humain qui le lit en clair et qui le saisit plusieurs fois de suite, par exemple deux fois de suite, sur un clavier connecté au premier ordinateur.

Dans ce dernier cas, pour procéder au test COMPAR_1, le premier ordinateur doit vérifier à la fois l'identité des deux numéros d'identification de commande C saisis par l'opérateur, et la correspondance de ces numéros avec le code optique K(C) de numéro d'identification de commande relevé par le lecteur optique sur le procès-verbal d'impression PVI, cet ordinateur étant donc programmé pour décoder le code K(C) et comparer le résultat de ce décodage au numéro d'identification de commande C.

Si le test COMPAR_1 conduit à un échec, c'est-à-dire si le premier ordinateur détecte une incohérence, notée ≢, dans les éléments de comparaison qui lui ont été soumis, il impose une interruption du procédé, notée STOP1, pour permettre l'identification et la correction de l'erreur détectée.

Dans le cas où le test COMPAR_1 est conduit avec succès, c'est-à-dire lorsque le premier ordinateur confirme la correspondance, notée ≡, entre les éléments de comparaison qui lui ont été soumis, le bobineau d'étiquettes BOBIN est installé à l'extrémité de la ligne de fabrication, et ce premier ordinateur donne une autorisation, notée OK1!, de procéder au deuxième test COMPAR_2.

Le deuxième test COMPAR_2, qui est mis en oeuvre sous la condition, notée OK1?, que l'autorisation OK1! de poursuivre le procédé ait été donnée, permet de vérifier la cohérence entre les données de fabrication D propagées par le flux de pilotage d'étiquetage Φ_{PE}, telles qu'elles sont imprimées sur le bobineau d'étiquettes BOBIN d'une part, et telles qu'elles sont imprimées sur le procès-verbal d'impression PVI, d'autre part.

De préférence, les données de fabrication D sont imprimées, sur le procès-verbal d'impression PVI et sur le bobineau d'étiquettes BOBIN, à la fois sous forme directement lisibles par un opérateur humain, et sous forme de codes optiques respectifs K(D), tels que des codes barres lisibles de façon automatique par un lecteur optique à rayon laser, comme dans le cas du numéro d'identification de commande imprimé sur le procès-verbal d'impression.

Pour mettre en oeuvre le test COMPAR_2, le procédé de l'invention comprend une opération notée REPORT_3 dans laquelle le code optique K(D) des données de fabrication relevées sur le procès-verbal d'impression PVI par un deuxième lecteur optique relié à un deuxième ordinateur est reporté, en tant que troisième élément de comparaison, dans la mémoire de ce deuxième ordinateur, et une opération notée REPORT_4 dans laquelle le code optique K(D) des données de fabrication relevées sur le bobineau d'étiquettes BOBIN par ce deuxième lecteur optique est reporté, en tant que quatrième élément de comparaison, dans la mémoire de ce même ordinateur.

Le deuxième ordinateur est par exemple constitué par un terminal d'atelier, directement implanté à la sortie de la ligne de fabrication, et peut, dans le cas où le procédé est fortement automatisé, être relié au premier ordinateur précédemment mentionné.

Une fois effectuées les opérations REPORT_3 et REPORT_4, le deuxième ordinateur vérifie la correspondance entre les éléments de comparaison qui lui ont été soumis.

Si le test COMPAR_2 conduit à un échec, c'est-à-dire si le deuxième ordinateur détecte une incohérence, notée ≢, dans les éléments de comparaison qui lui ont été soumis, il impose une interruption du procédé, notée STOP2, pour permettre l'identification et la correction de l'erreur détectée.

Dans le cas où le test COMPAR_2 est conduit avec succès, c'est-à-dire lorsque le deuxième ordinateur confirme la correspondance, notée ≡, entre les éléments de comparaison qui lui ont été soumis, ce second ordinateur donne une autorisation, notée OK2!, de procéder à l'apposition APPOS des étiquettes ETIQ, une à une, sur les produits PROD, et de procéder au troisième test COMPAR_3.

En fait, comme il est très avantageux d'apposer les étiquettes sur les produits PROD au fur et à mesure de la fabrication de ces produits, l'autorisation OK2! donnée par le deuxième ordinateur est de préférence conçue à la fois comme une autorisation de fabriquer les produits, de les étiqueter un à un en sortie de la ligne de fabrication et au fur et à mesure de leur fabrication, et de procéder simultanément au troisième test COMPAR_3.

Ainsi, dès lors que se réalise la condition, notée OK2?, d'apparition de l'autorisation OK2!, l'opération, notée FABR, de fabrication des produits PROD est lancée, de même que l'opération, notée APPOS, d'apposition des étiquettes ETIQ sur ces produits.

Pour pouvoir identifier individuellement chacun des produits fabriqués, il est avantageux de prévoir que chaque étiquette ETIQ porte, en plus du code optique K(D) de données de fabrication commun à tous les produits fabriqués au cours de la même campagne, un code optique K(N) lié, par la loi de codage prédéterminée, à un numéro de série N spécifiquement attribué au produit PROD destiné à recevoir cette étiquette ETIQ.

Le troisième test COMPAR_3, qui est lancé en même temps que l'opération APPOS d'apposition des étiquettes, permet de vérifier la cohérence entre les données de fabrication D telles qu'elles sont imprimées, sous forme de code optique K(D), sur le procès-verbal d'impression PVI, et telles qu'elles sont imprimées sur les étiquettes ETIQ apposées sur les produits fabriqués PROD.

Pour mettre en oeuvre le test COMPAR_3, le procédé de l'invention comprend une opération notée REPORT_5 dans laquelle les données de fabrication D et le numéro de série N relevés, par un troisième lecteur optique relié à un troisième ordinateur, et sous la forme de codes optiques respectifs K(D) et K(N) de données de fabrication et de numéro de série imprimés sur chaque étiquette ETIQ, sont reportés dans la mémoire de ce troisième ordinateur, en tant que cinquième élément de comparaison.

Par ailleurs, les données de fabrication D relevées sous la forme du code optique K(D) de données de fabrication imprimé sur le procès-verbal d'impression PVI sont reportées dans la mémoire de ce troisième ordinateur, en tant que sixième élément de comparaison.

En fait, le troisième ordinateur peut être constitué par le deuxième ordinateur et par exemple formé par le même terminal d'atelier, auquel cas le sixième élément de comparaison peut tout simplement être constitué par le troisième élément de comparaison, tel que mémorisé dans ce terminal d'atelier, par une opération notée MEM, à l'occasion du deuxième test COMPAR_2.

Une fois qu'il dispose des cinquième et sixième éléments de comparaison, respectivement K(D)+K(N) et K(D), le troisième ordinateur vérifie que le sixième élément de comparaison K(D) est bien contenu dans le cinquième élément de comparaison, K(D)+K(N).

Si le test COMPAR_3 conduit à un échec, c'est-à-dire si ce troisième ordinateur ne retrouve pas le sixième élément de comparaison K(D) dans le cinquième élément de comparaison K(D)+K(N), cette situation étant notée ∉, il impose une interruption de l'étiquetage, notée STOP3, pour permettre l'identification et la correction de l'erreur détectée.

Dans le cas où le test COMPAR_3 est conduit avec succès, c'est-à-dire lorsque le troisième ordinateur confirme la présence, notée ∈, du sixième élément de comparaison K(D) dans le cinquième élément de comparaison K(D)+K(N), ce troisième ordinateur effectue l'impression, notée IMP_PVF, d'un procès-verbal final de fabrication et d'étiquetage noté PVF.

## Revendications

1. Procédé d'identification permettant de conférer une traçabilité à des produits (PROD) fabriqués sur une ligne de fabrication, au cours d'une campagne de fabrication, et à partir de données d'origine (C, D) initialement réunies en un point source (P_SOURCE) et comprenant un numéro d'identification de commande (C) et des données de fabrication (D) communes aux produits (PROD) fabriqués lors de cette campagne, **caractérisé en ce qu'**il comprend la mise en place de deux flux d'information parallèles (Φ₁, Φ₂) dont chacun assure une propagation des données d'origine (C, D) dans le temps et l'espace à partir du point source (P_SOURCE), un premier (Φ₁) de ces flux se subdivisant en un flux de pilotage de fabrication (Φ_{PF}), destiné à commander la fabrication (FABR) des produits (PROD) conformément aux données de fabrication (D), et en un flux de référence de fabrication (Φ_{RF}), et le deuxième flux (Φ₂) formant un flux de pilotage d'étiquetage (Φ_{PE}), destiné à commander un marquage des produits fabriqués au moyen d'une apposition (APPOS) d'étiquettes (ETIQ) sur ces produits (PROD), **en ce que** la propagation des données d'origine (C, D) dans le flux de référence de fabrication (Φ_{RF}) est au moins assurée par l'impression (IMP_DOF) d'un document d'ordre de fabrication (DOF), **en ce que** la propagation des données d'origine (C, D) dans le flux de pilotage d'étiquetage (Φ_{PE}) est au moins assurée par l'impression (IMP_BOBIN) d'un bobineau d'étiquettes (BOBIN) et par l'impression subséquente (IMP_PVI) d'un procès-verbal d'impression (PVI) du bobineau, et **en ce que** ce procédé comprend également au moins un premier test (COMPAR_1) vérifiant la cohérence entre le numéro d'identification de commande (C) tel qu'il est imprimé sur le document d'ordre de fabrication (DOF) et le numéro d'identification de commande (C) tel qu'il est imprimé sur le procès-verbal d'impression (PVI) du bobineau, un deuxième test (COMPAR_2) vérifiant la cohérence entre les données de fabrication (D) propagées par le flux de pilotage d'étiquetage (Φ_{PE}), telles qu'elles sont imprimées sur le bobineau d'étiquettes (BOBIN) et telles qu'elles sont imprimées sur le procès-verbal d'impression (PVI), et un troisième test (COMPAR_3) vérifiant la cohérence entre les données de fabrication (D) telles qu'elles sont imprimées sur le procès-verbal d'impression (PVI) et telles qu'elles sont imprimées sur les étiquettes (ETIQ) apposées sur les produits fabriqués (PROD).

2. Procédé suivant la revendication 1, **caractérisé en ce que** le numéro d'identification de commande (C) est imprimé sur le procès-verbal d'impression (PVI) au moins sous forme d'un code optique (K(C)) de numéro d'identification de commande lisible par un lecteur optique et lié au numéro d'identification de commande (C) par une loi de codage prédéterminée.

3. Procédé suivant la revendication 2, **caractérisé en ce que** le premier test (COMPAR_1) est mis en oeuvre en reportant (REPORT_1) dans la mémoire d'un premier ordinateur, en tant que premier élément de comparaison, le numéro d'identification de commande (C) relevé sur le document d'ordre de fabrication (DOF), en reportant (REPORT_2) dans la mémoire de ce premier ordinateur, en tant que deuxième élément de comparaison, le numéro d'identification de commande (C) relevé, par un premier lecteur optique relié au premier ordinateur, sous la forme du code optique (K(C)) de numéro d'identification de commande imprimé sur le procès-verbal d'impression (PVI), et en soumettant au premier ordinateur la tâche consistant à vérifier la correspondance entre les premier et deuxième éléments de comparaison.

4. Procédé suivant la revendication 3, **caractérisé en ce que** le numéro d'identification de commande (C) est relevé sur le document d'ordre de fabrication (DOF) par un opérateur humain qui le lit en clair et qui le saisit plusieurs fois de suite sur un clavier connecté au premier ordinateur, et **en ce que**, pour la mise en oeuvre du premier test (COMPAR_1), le premier ordinateur vérifie l'identité des numéros d'identification de commande saisis par l'opérateur et du deuxième élément de comparaison (C), ce deuxième élément de comparaison (C) étant obtenu par décodage, au moyen de la loi de codage prédéterminée, du code optique (K(C)) de numéro d'identification de commande relevé par le premier lecteur optique.

5. Procédé suivant l'une quelconque des revendications précédentes, **caractérisé en ce que**, dans le cas où le premier test (COMPAR_1) est conduit avec succès, le bobineau d'étiquettes (BOBIN) est installé sur la ligne de fabrication, et une autorisation est donnée de procéder au deuxième test (COMPAR_2).

6. Procédé suivant l'une quelconque des revendications précédentes combinée à la revendication 2, **caractérisé en ce que** les données de fabrication (D) sont imprimées, sur le procès-verbal d'impression (PVI) et sur le bobineau d'étiquettes (BOBIN), au moins sous forme de codes optiques respectifs (K(D), K(D)) de données de fabrication lisibles par un lecteur optique et liés au numéros d'identification de commande respectifs (D, D) par la loi de codage prédéterminée.

7. Procédé suivant la revendication 6, **caractérisé en ce que** le deuxième test (COMPAR_2) est mis en oeuvre en reportant (REPORT_3) dans la mémoire d'un deuxième ordinateur, en tant que troisième élément de comparaison, les données de fabrication (D) relevées, par un deuxième lecteur optique relié au deuxième ordinateur, sous la forme du code optique (K(D)) de données de fabrication imprimé sur le procès-verbal d'impression (PVI), en reportant (REPORT_4) dans la mémoire du deuxième ordinateur, en tant que quatrième élément de comparaison, les données de fabrication (D) relevées, par le deuxième lecteur optique relié au deuxième ordinateur, sous la forme du code optique (K(D)) de données de fabrication imprimé sur le bobineau d'étiquettes (BOBIN), et en soumettant au deuxième ordinateur la tâche consistant à vérifier la correspondance entre les troisième et quatrième éléments de comparaison.

8. Procédé suivant l'une quelconque des revendications précédentes, **caractérisé en ce que**, dans le cas où le deuxième test (COMPAR_2) est conduit avec succès, une autorisation est donnée d'étiqueter (APPOS) un à un les produits fabriqués, et de procéder au troisième test (COMPAR_3).

9. Procédé suivant la revendication 8, **caractérisé en ce que**, dans le cas où le deuxième test (COMPAR_2) est conduit avec succès, une autorisation est donnée de fabriquer (FABR) les produits (PROD), de les étiqueter un à un (APPOS) en sortie de la ligne de fabrication et au fur et à mesure de leur fabrication, et de procéder simultanément au troisième test (COMPAR_3).

10. Procédé suivant l'une quelconque des revendications précédentes, **caractérisé en ce qu'**il comprend une opération de vérification supplémentaire consistant, après l'impression de chaque étiquette (ETIQ) du bobineau d'étiquettes (BOBIN), à relire cette étiquette (ETIQ) de façon automatique pour vérifier au moins qu'elle a été imprimée complètement.

11. Procédé suivant la revendication 6, **caractérisé en ce que** chaque étiquette (ETIQ) du bobineau (BOBIN) porte, en plus du code optique (K(D)) de données de fabrication, un code optique (K(N)) lié, par la loi de codage prédéterminée, à un numéro de série (N) spécifiquement attribué au produit (PROD) destiné à recevoir cette étiquette (ETIQ).

12. Procédé suivant la revendication 11, **caractérisé en ce que** le troisième test (COMPAR_3) est mis en oeuvre en reportant (REPORT_5) dans la mémoire d'un troisième ordinateur, en tant que cinquième élément de comparaison, les données de fabrication (D) et le numéro de série (N) relevés, par un troisième lecteur optique relié au troisième ordinateur, sous la forme des codes optiques (K(D), K(N)) de données de fabrication et de numéro de série imprimés sur chaque étiquette (ETIQ), en reportant (MEM) dans la mémoire du troisième ordinateur, en tant que sixième élément de comparaison, les données de fabrication (D) relevées sous la forme du code optique (K(D)) de données de fabrication imprimé sur le procès-verbal d'impression (PVI), et en soumettant au troisième ordinateur la tâche consistant à vérifier que le sixième élément de comparaison est contenu dans le cinquième élément de comparaison.

13. Procédé suivant les revendications 7 et 12, **caractérisé en ce que** les deuxième et troisième ordinateurs sont constitués par une même unité formant un terminal d'atelier, et **en ce que** le sixième élément de comparaison est constitué par le troisième élément de comparaison mémorisé (MEM) dans ce terminal d'atelier à l'occasion du deuxième test (COMPAR_2).

14. Procédé suivant l'une quelconque des revendications précédentes, **caractérisé en ce qu'**il comprend l'impression (IMP_PVF) d'un procès-verbal final de fabrication et d'étiquetage (PVF), effectuée dans le cas où le troisième test (COMPAR_3) est conduit avec succès.

15. Application d'un procédé suivant l'une quelconque des revendications précédentes à la traçabilité de produits en polyéthylène.

16. Application d'un procédé suivant l'une quelconque des revendications 1 à 14 à la traçabilité de tubes en polyéthylène équipant un réseau de distribution de gaz.
